# EUROPÄISCHE PATENTSCHRIFT

(11) **EP 1 783 531 B1**
(45) Veröffentlichungstag und Bekanntmachung des Hinweises auf die Patenterteilung: **03.12.2008**
(21) Anmeldenummer: 06120230.5
(22) Anmeldetag: 06.09.2006
(51) Int. Cl.: G02B 27/01

(54) **Projektionsanzeige**
Projection display
Affichage à projection

(30) Priorität: 03.11.2005 DE 102005052424
(43) Veröffentlichungstag der Anmeldung: 09.05.2007
(73) Patentinhaber: ROBERT BOSCH GMBH, 70442 Stuttgart (DE)
(72) Erfinder: Breider, Dominique, CH-1024, Ecublens (CH); Longchamp, Jean-Francois, 1012, Lausanne / CH (CH); Lopez, Eladio, 1090, LA CROIX / CH (CH); Pandazis, Jean-Charles, 1066, Epalinges / Schweiz (CH); Schweizer, Philippe, 1110, Morges (CH); Haroud, Karim, 1512, Chavannes sur Moudon (CH); Pachoud, Marc, 1814, La Tour-de-Peilz (CH)

(56) Entgegenhaltungen:
- EP-A- 0 704 740
- EP-A- 1 284 432
- EP-A2- 1 333 410
- WO-A-03/070093
- DE-A1- 10 161 262
- DE-A1- 10 257 484
- DE-A1-1102004 031 31
- US-A- 5 734 357

## Beschreibung

### Stand der Technik

Die Erfindung geht aus von einer Projektionsanzeige nach der Gattung des Hauptanspruchs. Aus der WO 01/33282 A1 ist bereits eine Anzeigeeinrichtung bekannt, bei der eine Beleuchtungseinrichtung ein Bild auf eine gebogene, teilweise transparente Spiegelanordnung projiziert. Ferner ist eine Bildaufnahmeeinheit vorgesehen, die über diese Spiegelanordnung die Pupille eines Betrachters beobachtet und die Pupillenposition auswertet. In Abhängigkeit von der Blickrichtung des Benutzers wird dann die Projektion des Bildes geregelt.

Aus der EP 1333 410 A2 ist ein Head-Up-Display bekannt, bei dem das Bild eines Auges eines Fahrers über das Head-Up-Display-System aufgenommen wird.

Aus der DE 102 57 484 A1 ist eine Vorrichtung zum Darstellen der Umgebung eines Fahrzeugs bekannt, bei dem eine Auswerteeinrichtung ein virtuelles Umgebungsbild erzeugt, in welchem von der Kamera erfasste Objekte perspektivisch korrekt dargestellt sind. Das virtuelle Umgebungsbild wandert mit der Blickrichtung des Fahrers mit, wodurch der Fahrer seinen Blick nicht von der Fahrtrichtung abwenden muss.

Aus der EP 1 284 432 A1 ist eine Vorrichtung zur Bedienung eines Fahrerunterstützungssystems bekannt, bei dem mittels eine Head-Up-Displays Informationen des Fahrerunterstützungssystems auf die Windschutzscheibe projiziert werden. Hierbei ist ein Lichtsensor vorgesehen, der die Umgebungshelligkeit misst, so dass die Helligkeit der Projektion auf die Windschutzscheibe an die Umgebungshelligkeit angepasst wird, indem die Polarisation des Lichtes entsprechend angepasst wird oder indem die Leistung des Projektors geregelt wird.

### Vorteile der Erfindung

Die erfindungsgemäße Projektionsanzeige mit den Merkmalen des Hauptanspruchs hat demgegenüber den besonderen Vorteil, dass die Projektionsanzeige eine Kamera zur Beobachtung einer Fahrzeugumgebung vor dem Fahrzeug aufweist, so dass hierdurch der Kontrast einer Bilddarstellung auf der Projektionsfläche in Abhängigkeit von der Farbe der Fahrzeugumgebung in der Blickrichtung des Fahrers geregelt werden kann. Hierdurch kann die Erkennung und insbesondere die Hervorhebung von Hindernissen verbessert werden, da ein Benutzer eingeblendete Hinweise besser erkennen kann.

Durch die in den Unteransprüchen aufgeführten Maßnahmen sind vorteilhafte Weiterbildungen und Verbesserungen der im Hauptanspruch angegebenen Projektionsanzeige möglich. So ist es vorteilhaft, die Aufmerksamkeit des Fahrers und/oder eine Information über gefährliche Objekte vor dem Fahrzeug zu erfassen und bei der Darstellung von Hinweise in der Projektionsfläche zu berücksichtigen. Hierdurch wird sichergestellt, dass bei einem unaufmerksamen Fahrer bzw. bei besonders gefährlichen Objekten vor dem Fahrzeug ein deutlicher Hinweis an den Fahrer ausgegeben wird, um den Fahrer somit entsprechend zu warnen.

Weiterhin ist es vorteilhaft, einen verformbaren Spiegel zur Bildgebung zu verwenden. Hierdurch können besonders leicht Abbildungsfehler ausgeglichen werden und insbesondere die Projektion an eine Windschutzscheibe mit einer variablen, ortsabhängigen Krümmung angepasst werden.

Weiterhin ist es vorteilhaft, eine Stelleinheit zur Erzeugung einer linearen und/oder rotatorischen Positionsänderung einer auf die Projektionsfläche projizierten Bilddarstellung vorzusehen. Mit der Stelleinheit kann z.B. die Abbildungsoptik und/oder die Bilderzeugungseinheit bewegt werden. Hierdurch ist eine einfache Anpassung an eine veränderte Blickrichtung des Fahrers möglich.

Weiterhin ist es vorteilhaft, eine Standard-Blickrichtung eines Fahrers insbesondere personenabhängig zu speichern. Wird das System initialisiert, so wird zunächst diese Standard-Blickrichtung eingestellt, die z.B. an eine Sitzposition oder an eine Körperhaltung des Fahrers angepasst ist.

Weiterhin ist es vorteilhaft, eine gesonderte Beleuchtungseinheit zur Beleuchtung des Fahrers für die Beobachtung durch eine Detektionseinheit vorzusehen. Diese Beleuchtungseinheit kann im Strahlengang selbst vorgesehen sein kann, aber auch außerhalb des Strahlengangs, z.B. an einer Decke des Fahrzeuginnenraums, angeordnet sein. Unabhängig von der Lichtsituation im Fahrzeug kann damit der Fahrer beobachtet und seine Blickrichtung ermittelt werden.

### Zeichnung

Ausführungsbeispiele der Erfindung sind in der Zeichnung dargestellt und in der nachfolgenden Beschreibung näher erläutert. Es zeigen
Figur 1 einen schematischen Aufbau einer erfindungsgemäßen Projektionseinheit,
Figuren 2 bis 5 verschiedene Ausführungsbeispiele einer erfindungsgemäßen Projektionsanzeige,
Figur 6 eine schematische Blockdarstellung einer Informationsverarbeitung zur Anzeige eines Warnhinweises mit einer erfindungsgemäßen Projektionsanzeige in einem Fahrzeug.

### Beschreibung des Ausführungsbeispiels

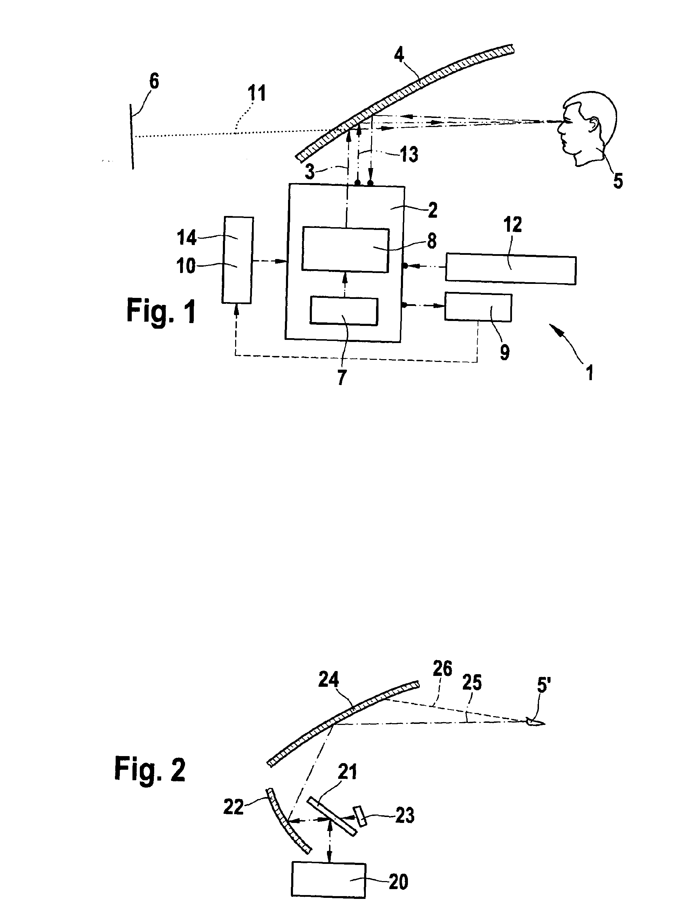

In der Figur 1 ist eine Projektionsanzeige 1 in einem Fahrzeug gezeigt, bei der von einer bildgebenden Einheit 2 eine Bilddarstellung 3 derart auf eine Windschutzscheibe 4 eines Kraftfahrzeugs projiziert wird, dass ein Passagier bzw. der Fahrer 5 des Fahrzeugs ein auf die Windschutzscheibe 4 projiziertes virtuelles Bild 6 erkennt. Die bildgebende Einheit 2 weist hierzu eine Bilderzeugungseinheit 7 auf, dessen Bild über eine Vergrößerungsoptik 8 auf die Windschutzscheibe 4 projiziert wird. Die Position eines Auges des Benutzers wird dadurch erfasst, dass über die Windschutzscheibe 4 ein Bild des Auges von der bildgebenden Einheit 2 aufgenommen und von einer Kamera 9 verarbeitet wird. Das Kamerabild und gegebenenfalls eine ermittelte Ortsposition des Auges des Fahrers 5 oder eine ermittelte Blickrichtung des Fahrers 5 werden an eine Kontrolleinheit 10 weitergegeben. Die Kontrolleinheit 10 steuert nunmehr die bildgebende Einheit 2 derart an, dass eine Position des projizierten Bildes 3 derart verändert wird, dass die Position des virtuellen Bildes 6 an die Blickrichtung des Fahrers 5 angepasst wird. Schaut z.B. der Betrachter im Vergleich zu der in der Figur 1 gezeigten Blickrichtung 11 nun weiter nach oben und weiter nach rechts, so wird auch das projizierte virtuelle Bild weiter nach oben und weiter nach rechts auf der Windschutzscheibe verschoben.

Um eine Erfassung der Blickrichtung auch nachts oder bei schlechten Lichtverhältnissen zu ermöglichen, ist vorzugsweise eine Beleuchtungseinheit 12 vorgesehen, die insbesondere als eine Infrarotlichtquelle ausgebildet ist. In einer ersten Ausführungsform wird das Licht der Infrarotlichtquelle über den gleichen optischen Weg in Richtung des Fahrers abgestrahlt, über den auch das projizierte Bild abgestrahlt wird bzw. das Bild des Fahrers erfasst wird. Entsprechend ist ein Lichtweg 13 für die Beleuchtung in der Figur 1 dargestellt. Um den Fahrer nicht zu blenden, wird für die Beleuchtung vorzugsweise Infrarotlicht verwendet. Die Kamera 9 ist auch zur Erfassung des Infrarotlichts ausgelegt.

Als eine Bilderzeugungseinheit 7 kann z.B. eine hinterleuchtete Flüssigkristallanzeige vorgesehen sein, deren Licht über die Vergrößerungsoptik 8 auf die Windschutzscheibe 4 projiziert wird. Ferner können aber auch ein oder mehrere Laserstrahlen verwendet werden, die über geeignete Ablenkmittel geführt ein Bild projizieren.

Die Vergrößerungsoptik 8 ist insbesondere als eine Linsenoptik ausgeführt. In einer weiteren Ausführungsform kann aber auch ein gekrümmter Spiegel zur Projektion auf die Windschutzscheibe 4 verwendet werden. In einer besonderen Ausführungsform ist dieser Spiegel verformbar ausgeführt, so dass er in seinem Krümmungsradius lokal veränderbar ist. Zur Anpassung der Bildposition auf der Windschutzscheibe 4 kann einerseits die Bilderzeugungseinheit 7 ein anderes Bild erzeugen, bei dem z.B. ein Hinweissymbol, das sich räumlich auf der Windschutzscheibe 4 verändern soll, an einer anderen Position auf die Scheibe projiziert wird. In einer weiteren Ausführungsform ist es auch möglich, die Bilderzeugungseinheit 7 zu verkippen, um die Bildposition anzupassen. In einer weiteren Ausführungsform kann auch die Vergrößerungsoptik 8 in verschiedene Raumrichtungen verkippt werden, um die Position des projizierten Bildes zu verändern. In einer weiteren Ausführungsform kann auch die gesamte bildgebende Einheit 2 räumlich verkippbar gelagert werden, um eine Anpassung der Bildposition zu erreichen. In einer weiteren Ausführungsform kann neben einer Kippbewegung auch eine Drehbewegung ausgeführt werden. Zur Erzeugung einer Verkippung oder einer Drehung sind in der Figur 1 nicht gezeigte Stellglieder vorgesehen, die von der Kontrolleinheit 10 entsprechend einer zu erreichenden Position des Bildes angesteuert werden.

In der Figur 2 ist ein Ausführungsbeispiel für eine Bilddarstellung im Detail dargestellt. Eine Bildererzeugungseinheit 23 projiziert ein Bild, das durch einen wellenlängenselektiven Spiegel 21 hindurch auf einen asphärischen Spiegel 22 gelenkt wird und von diesem auf eine Windschutzscheibe 24 projiziert wird. Von dort wird es zu dem Auge 5' des Fahrers umgelenkt. Eine Blickrichtung 25 ist schematisch eingezeichnet. Ändert sich eine Blickrichtung des Betrachters so wäre auch eine Position des virtuellen Bildes anzupassen. Dies ist schematisch durch eine gestrichelte Linie 26 gekennzeichnet. Zu einer Erfassung einer Änderung der Blickrichtung oder einer Blickposition 5' ist eine Kameraeinheit 20 vorgesehen, die über den frequenzselektiven Spiegel 21 in den Strahlgang zwischen Bilderzeugungseinheit 23 und asphärischem Spiegel 22 hineingeschaltet ist. Der frequenzselektive Spiegel 21 ist dabei derart ausgeführt, dass er für sichtbares Licht zumindest nahezu durchlässig ist, während er Infrarotlicht zu der Kameraeinheit 20 reflektiert Die Kameraeinheit 20 weist vorzugsweise auch eine Beleuchtungseinheit auf, deren Infrarotlicht über den frequenzselektiven Spiegel 21 ebenfalls in den Strahlengang hineinreflektiert wird und damit das Auge 5' des Fahrers beleuchtet. Insbesondere durch ein Verschwenken des asphärischen Spiegels 22 und/oder durch eine Positionsänderung der Bilderzeugungseinheit 23 kann die Position eines virtuellen Bildes auf der Windschutzscheibe 24 angepasst werden. Ferner kann der Spiegel 22 hierzu auch lokal deformierbar ausgeführt sein, indem z.B. verschiedene Aktoren den Krümmungsgrad des asphärischen Spiegels 22 lokal ändern können. Hierdurch kann die Spiegelkrümmung an eine möglicherweise ortsabhängige Krümmung der Windschutzscheibe 24 angepasst werden, um eine durch die Krümmung bedingte Bildverzerrung auszugleichen.

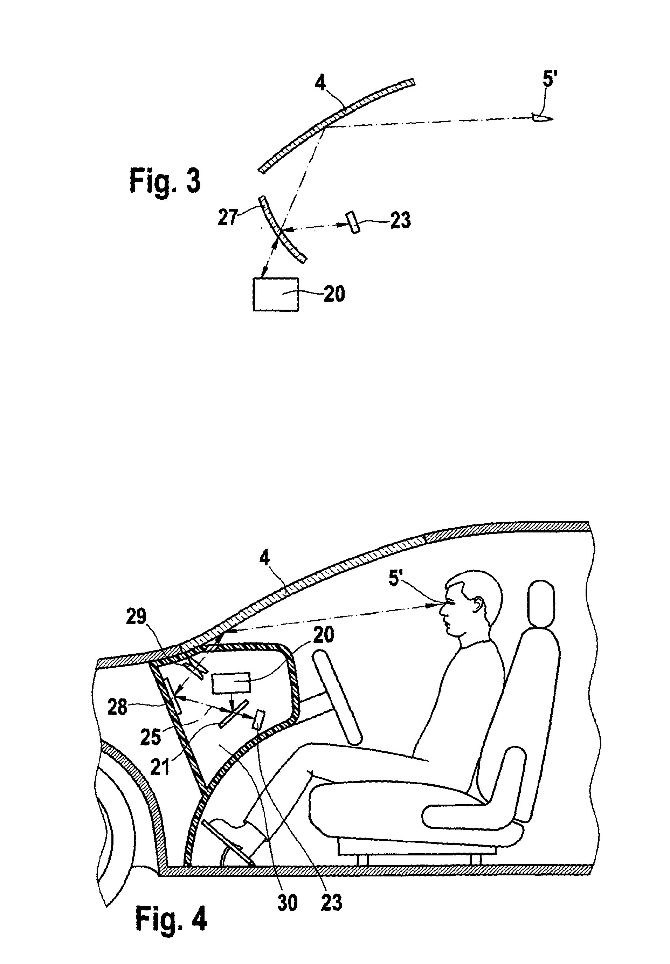

In der Figur 3 ist ein weiteres Ausführungsbeispiel dargestellt. Bei dieser Ausführungsform ist ein Spiegel 27 selbst als ein frequenzselektiver Spiegel ausgeführt. Für die Beobachtung des Fahrers muss hierzu die Kameraeinheit 20 eine eigene Optik aufweisen. Jedoch ist es nicht erforderlich, einen weiteren Spiegel in dem Strahlengang zu der Bilderzeugungseinheit 23 vorzusehen.

In der Figur 4 ist ein weiteres Ausführungsbeispiel gezeigt, bei dem der asphärische Spiegel gegenüber der Darstellung nach der Figur 2 durch eine Kombination aus einem ebenen Spiegel 28 und einer Linsenanordnung 29 ersetzt wird. Bei der hier gezeigten Ausführungsform ist die gesamte zur Strahlenerzeugung erforderliche Optik in einer Instrumententafel 30 des Fahrzeugs eingebaut.

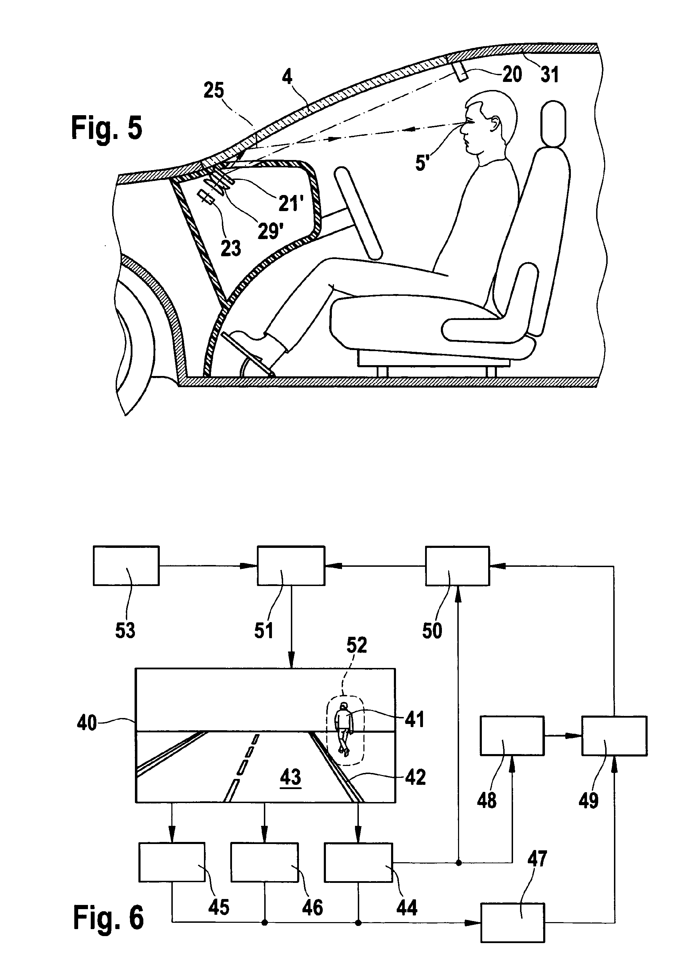

In der Figur 5 ist ein weiteres Ausführungsbeispiel gezeigt, bei dem eine Bilderzeugungseinheit 23 zwar in der Instrumententafel angeordnet ist und auch über die Windschutzscheibe 4 ein Bild zu einem Fahrer 5' gelenkt wird. Eine Kameraeinheit 20 ist jedoch an einem Fahrzeugdach 31 angeordnet. Über einen transflektiven Spiegel 21', der vor einer Linsenanordnung 29' vor der Bilderzeugungseinheit 23 vorgesehen ist, kann die Kamera den Fahrer 5' beobachten. Hierbei kann der Fahrer durch eine geeignete Beleuchtungseinrichtung mit Infrarotlicht beleuchtet werden.

Eine Beleuchtungseinheit kann an verschiedenen Stellen im Fahrzeug vorgesehen sein: Sie kann einerseits unmittelbar auf das Gesicht des Fahrers gerichtet sein. Hierzu wäre die Beleuchtungseinheit z.B. am Fahrzeugdach anzuordnen, wobei sie den Fahrer z.B. mittels geeigneter Infrarot-Leuchtdioden beleuchtet. In einer weiteren Ausführungsform kann die Beleuchtungseinheit aber auch derart angeordnet sein, dass sie lediglich über ein Einspiegeln über die Windschutzscheibe den Fahrer beleuchtet, z.B. über an der Instrumententafel angeordnete Infrarotlichtquellen. Ferner ist es auch möglich, wie in den Figuren 2 bis 5 gezeigt, eine Beleuchtung über die Vergrößerungsoptik einzubinden und Licht über die Windschutzscheibe in Richtung der Augen des Fahrers umzulenken. Ferner ist es in einer weiteren Ausführungsform auch möglich, die Beleuchtungseinheit in die Kamera oder in die bildgebende Einheit selbst einzubauen. Hierzu weist die Kamera bzw. die bildgebende Einheit selbst eine Lichtquelle auf, so dass deren Licht von der Vergrößerungsoptik aufgenommen und in Richtung des Fahrers reflektiert wird.

Die Beleuchtungseinheit dient insbesondere dazu, mit einer geeigneten Kamera Reflektionen auf der Netzhaut des Betrachters zu erkennen bzw. eine Kopfform des Betrachters in der Anzeige zu erfassen. Hierzu sind insbesondere Halbleiterlichtquellen vorgesehen, z.B. Laserdioden oder Leuchtdioden, die im Infrarotlichtbereich, insbesondere im NIR-Lichtbereich Strahlen aussenden. In einer besonderen Ausführungsform können verschiedene Lichtquellen zeitversetzt angesteuert werden. Diese Lichtquellen sind bevorzugt räumlich getrennt voneinander angeordnet, z.B. an zwei verschiedenen Stellen im Fahrzeug. Hierdurch können störende Reflektionen, z.B. von Brillengläsern ausgeschlossen werden.

Die Kameraeinheit 20 ist insbesondere als eine Kamera zur Detektion von sichtbarem Licht, aber auch von nahem Infrarot ausgelegt. Hierdurch kann einerseits ein Bild des Fahrers selbst bei Tageslicht erfasst werden, andererseits kann aber auch die Nachtbeleuchtung für die Erfassung ausgenutzt werden. In einer weiteren Ausführungsform kann auch die Kamera getrennt von der Projektionsanzeige selbst vorgesehen sein und den Fahrer unmittelbar beobachten, z.B. bei einem Einbau der Kamera in der Instrumententafel oder im Fahrzeugdach.

Für verschiedene Projektionsorte können in einem Speicher der Kontrolleinheit optische Abweichungen infolge einer Krümmung der Windschutzscheibe abgelegt sein. Für eine Ansteuerung der Vergrößerungsoptik kann daher abhängig von der Ortskoordinate, auf der das Licht auf der Windschutzscheibe projiziert wird, eine Verzerrungskorrektur erfolgen. Insbesondere ist hierbei eine Verwendung eines verformbaren, asphärischen Spiegels möglich, wobei ortsabhängig ein Krümmungsradius des Spiegels zum Ausgleich der Verzerrung der Windschutzscheibe vorgegeben wird.

In einer bevorzugten Ausführungsform ist es möglich, dass in einem Speicher 14 der Bilderzeugungseinheit eine Standardposition des Fahrers abgelegt ist. Hat der Fahrer eine von ihm gewünschte Sitzposition im Fahrzeug eingestellt, so kann er über eine in der Figur 1 nicht gezeigte Bedientaste eine Vermessung seiner Blickrichtung auslösen. Die im Folgenden erfasste Blickrichtung wird in dem Speicher 14 abgelegt, der insbesondere einen Teil der Kontrolleinheit 10 ist. Startet der Fahrer nun das Fahrzeug, so wird vorzugsweise, gegebenenfalls nach einer vorzunehmenden Identifikation des Fahrers, z.B. über eine Eingabe einer Codenummer, die Anzeige entsprechend der gespeicherten Blickrichtung des Fahrer eingestellt. Somit muss nicht zuerst eine Blickrichtung erfasst werden, sondern eine Einstellung steht unmittelbar ausgehend von einer gespeicherten Position bereits zur Verfügung, so dass zunächst nur Abweichungen von der Standard-Blickrichtung des Fahrers erfasst und für die Projektion berücksichtigt werden müssen.

In der Figur 6 ist ein Einsatz einer erfindungsgemäßen Projektionseinheit im Fahrzeug gezeigt. Vor dem Fahrer ist eine Straßenszene 40 sichtbar, bei der eine Person 41 sich im Bereich eines Straßenrandes 42 vor dem Fahrweg 43 des Fahrzeugs aufhält. Die Straßenszenerie 40 und insbesondere die Person 41 werden von einer Kamera 44 erfasst. Zusätzlich werden in einer bevorzugten Ausführungsform weitere Sensorsysteme 45 abgefragt, z.B. ein Geschwindigkeitssensor. In einer weiteren Ausführungsform kann auch der Straßenverlauf 43 vor dem Fahrzeug mit einer Fahrzeugnavigation 46 abgeglichen werden. Durch die Auswertung der verschiedenen Erfassungssysteme 44, 45, 46 wird die Szenerie 40 vor dem Fahrzeug hinsichtlich gefährlicher Objekte in einem Bewertungsschritt 47 mittels einer hierfür ausgelegten Recheneinheit bewertet. Hierbei wird erkannt, dass die Person 41 für das Fahrzeug gefährlich werden könnte, wenn sie plötzlich auf den Fahrweg 43 tritt.

Das Kamerabild wird dahingehend bewertet, welchen optischen Eindrücken der Blick des Fahrers wohl folgen wird. Dies wird in einem Auswerteschritt 48 vorgenommen. In einem Vergleich mit den in dem Bewertungsschritt 47 festgestellten, für das Fahrzeug möglicherweise gefährlichen Objekten, wird in einem weiteren Bewertungsschritt 49 festgelegt, ob der Fahrer möglicherweise ein für ihn gefährdendes Objekt aufgrund der statistischen Auswertung des Kamerabildes nicht wahrnehmen wird. Zusätzlich werden die von der Kamera 44 erfassten Lichtverhältnisse insbesondere vor dem Fahrzeug, aber auch eine Blendung durch Lichtquellen innerhalb des Fahrzeugs sowie eine mögliche schlechte Wahrnehmung eines Objekts aus dem Bewertungsschritt 49 in einem weiteren Bewertungsschritt 50 dahingehend ausgewertet, ob ein für das Fahrzeug möglicherweise gefährliche Objekt in einer Windschutzscheibenanzeige hervorgehoben werden soll. Ferner wird festgelegt, mit welchen Mitteln die Hervorhebung erfolgen soll. Bei Dunkelheit sollte die Hervorhebung z.B. durch eine Einblendung eines hellen Symbols erzeugt werden, während z.B. bei einer sehr hellen Umgebung oder bei Gegenlicht besser ein Symbol in dunkler Farbe eingeblendet wird, da es sich besser von dem Hintergrund abheben wird. So ist es z.B. auch erforderlich, die Beleuchtung an eine geänderte Fahrsituation anzupassen, so z.B. an eine Fahrt in einen Tunnel oder an eine Fahrt aus einem Tunnel heraus.

In einem Einblendungsschritt 51 wird ein entsprechendes Symbol 52 um die Person 41 in die Windschutzscheibe eingeblendet. Dadurch wird der Fahrer besonders auf die Person 41 hingewiesen. Diese Einblendung erfolgt in erfindungsgemäßer Weise unter Berücksichtigung der Blickrichtungserfassung 53 mittels der erfindungsgemäßen Projektionseinheit. Dabei wird zunächst die Blickrichtung des Fahrers erfasst. Die Blickrichtung wird dabei derart in Relation zu der Position der Person 41 gesetzt, dass eine Einblendung der Markierung 52 so erfolgt, dass die Markierung für den Betrachter unabhängig von seiner aktuellen Blickrichtung um die Person 41 herum angeordnet erscheint. Ergänzend kann gegebenenfalls auch eine akustische Warnung ausgegeben werden, die den Fahrer auf die Einblendung einer Markierung 52 in der Windschutzscheibe ortskorrekt, das heißt räumliche in Deckung mit dem tatsächlichen Objekt, in der Szenerie 40 vor ihm hinweist.

Für die Bewertung des von der Kamera 44 erfassten Bildes ist es z.B. möglich, die Merkmalsintegrationstheorie zu nutzen. Hierzu wird das Videobild in verschiedene Bereiche mit ähnlicher Farbe, Lichtintensität und/oder Strukturen unterteilt, gegebenenfalls auch hinsichtlich der Bewegung in der Straßenszenerie. So unterscheiden sich vor dem Fahrzeug fahrende andere Fahrzeuge von einem Hintergrund sowie der Straßenrand vom Fahrbahnbelag selbst. Hieraus wird eine schematische Karte der Szenerie vor dem Fahrer erstellt. In dieser schematischen Karte werden bestimmten Bereichen Gefahrenwerte zugewiesen. In Abhängigkeit von einer möglichen Gefährdung durch Objekte oder durch besonders auffallende Objekte in diesen Bereichen, werden unterschiedliche Stimuli zur Warnung an den Fahrer überbracht.

In einer weiteren Ausführungsform ist es auch möglich, bei der Bewertung einer möglichen Gefährdung bereits die Blickrichtung des Fahrers mit einzubeziehen. So kann z.B. bei der Gefahrenbewertung dann eine höhere Gefährdung eingesetzt werden, wenn feststeht, dass der Fahrer z.B. gerade auf eine Bedienung eines Radiogerätes schaut und nicht die Szenerie 40 im Blick hat.

Ferner kann die Einblendung auch davon abhängig sein, inwiefern damit zu rechnen ist, dass der Fahrer ein Objekt sieht. Weist das gefährliche Objekt einen hohen Kontrast auf und liegt es in seinem direkten Blickfeld, so ist eine zusätzliche Hervorhebung wahrscheinlich kaum oder nur dezent erforderlich. Ist das Objekt dagegen schwer erkennbar, so ist es durch eine Warnfarbe und gegebenenfalls durch eine aufblinkende Markierung hervorzuheben.

## Patentansprüche

1. Projektionsanzeige zur Erzeugung eines virtuellen Bildes in einem Fahrzeug mit einer Bilderzeugungseinheit (7, 23), mit einer Projektionsfläche, mit einer Abbildungsoptik (8, 21, 22, 27, 29) zur Projektion des virtuellen Bildes auf die Projektionsfläche, wobei die Projektionsfläche die Windschutzscheibe (4, 24) des Fahrzeugs ist, und mit einer Detektionseinheit (9, 20) zur Ermittlung einer Blickrichtung eines Fahrers des Fahrzeugs, wobei die Detektionseinheit (9, 20) den Fahrer über die Abbildungsoptik (8, 21, 22, 27, 29) beobachtet, **gekennzeichnet durch** eine an die die Projektionsanzeige angeschlossene Kamera (44) zur Beobachtung einer Fahrzeugumgebung (40) vor dem Fahrzeug, wobei Mittel vorhanden sind derart, dass der Kontrast einer Bilddarstellung auf der Projektionsfläche in Abhängigkeit von der Farbe der mit der Kamera (44) aufgenommenen Fahzeugumgebung in der Blickrichtung des Fahrers erfolgt. ,

2. Projektionsanzeige nach Anspruch 1, **gekennzeichnet durch** eine Beleuchtungseinheit (12) zur Beleuchtung des Fahrers für die Beobachtung **durch** die Detektionseinheit.

3. Projektionsanzeige nach einem der vorhergehenden Ansprüchen, **gekennzeichnet durch** einen vorzugsweise frequenzselektiven Strahlteiler (21, 21',27) zwischen der Detektionseinheit und der Abbildungsoptik zur Verbindung des von der Bilderzeugungseinheit ausgesendeten Strahls und des zu der Detektionseinheit zu lenkenden Strahls.

4. Projektionsanzeige nach einem der vorhergehenden Ansprüche, **gekennzeichnet durch** eine Kontrolleinheit (10) zum Bewerten einer Information über die Aufmerksamkeit des Fahrers und/oder über gefährliche Objekte vor dem Fahrzeug und zur Beeinflussung einer Darstellung von Hinweisen in der Projektionsfläche in Abhängigkeit von der Aufmerksamkeit des Fahrers und/oder den gefährlichen Objekten.

5. Projektionseinheit nach einem der vorhergehenden Ansprüche, **gekennzeichnet durch** eine Stelleinheit zur Erzeugung einer linearen und/oder rotatorischen Positionsänderung einer auf die Projektionsfläche projizierten Bilddarstellung in Abhängigkeit von der Blickrichtung des Fahrers.

6. Projektionsanzeige nach einem der vorhergehenden Ansprüche, **dadurch gekennzeichnet, dass** die Abbildungsoptik einen verformbaren Spiegel (22) aufweist.

7. Projektionsanzeige nach einem der vorhergehenden Ansprüche, **gekennzeichnet durch** einen Speicher (14) zum Ablegen einer Basisblickrichtung zur Festlegung der Position der Projektion bei einer Initialisierung der Projektionsanzeige.

## Claims

1. Projection display for generating a virtual image in a vehicle, having an image-generating unit (7, 23), having a projection surface, having imaging optics (8, 21, 22, 27, 29) for projecting the virtual image onto the projection surface, wherein the projection surface is the windscreen (4, 24) of the vehicle, and having a detection unit (9, 20) for determining a viewing direction of a driver of the vehicle, wherein the detection unit (9, 20) observes the driver via the imaging optics (8, 21, 22, 27, 29), **characterized by** a camera (44) which is connected to the projection display and which has the purpose of observing the surroundings (40) of the vehicle in front of the vehicle, wherein means are provided such that the contrast of the representation of an image on the projection surface is provided as a function of the colour of the surroundings of the vehicle which are recorded by means of the camera (44), in the viewing direction of the driver.

2. Projection display according to Claim 1, **characterized by** an illumination unit (12) for illuminating the driver for observation by means of the detection unit.

3. Projection display according to one of the preceding claims, **characterized by** a preferably frequency-selective beam splitter (21, 21', 27) between the detection unit and the imaging optics for connecting the beam which is emitted by the image-generating unit and the beam which is to be directed to the detection unit.

4. Projection display according to one of the preceding claims, **characterized by** a monitoring unit (10) for evaluating information about the attentiveness of the driver and/or dangerous objects in front of the vehicle and for influencing a representation of instructions in the projection surface as a function of the attentiveness of the driver and/or the dangerous objects.

5. Projection display according to one of the preceding claims, **characterized by** an actuation unit for generating a linear and/or rotational change in position of a representation of an image which is projected onto the projection surface, as a function of the viewing direction of the driver.

6. Projection display according to one of the preceding claims, **characterized in that** the imaging optics have a deformable mirror (22).

7. Projection display according to one of the preceding claims, **characterized by** a memory (14) for storing a basic viewing direction in order to determine the position of the projection when the projection display is initialized.

## Revendications

1. Dispositif d'affichage par projection pour générer dans un véhicule l'image virtuelle à l'aide d'une unité générant une image (7, 23), une surface de projection, une optique d'image (8, 21, 22, 27, 29) pour projeter l'image virtuelle sur la surface de projection, la surface de projection étant le pare-brise (4, 24) du véhicule, et
une unité de détection (9, 20) pour déterminer la direction de visée du conducteur du véhicule,
l'unité de détection (9, 20) observant le conducteur par l'optique d'image (8, 21, 22, 27, 29),
**caractérisé par**
une caméra (44) reliée au dispositif d'affichage par projection pour observer l'environnement (40) du véhicule à l'avant du véhicule,
des moyens étant prévus pour que le contraste de la représentation de l'image sur la surface de projection se fasse en fonction de la couleur de l'environnement du véhicule pris par la caméra (44) dans la direction de visée du conducteur.

2. Dispositif d'affichage par projection selon la revendication 1,
**caractérisé par**
une unité d'éclairage (12) pour éclairer le conducteur pour l'observation par l'unité de détection.

3. Dispositif d'affichage par projection selon l'une des revendications précédentes,
**caractérisé par**
un diviseur de faisceau (21, 21', 27) de préférence sélectif en fréquence entre l'unité de détection et l'optique d'image pour relier le faisceau émis par l'unité générant l'image et le faisceau dirigé vers l'unité de détection.

4. Dispositif d'affichage par projection selon l'une des revendications précédentes,
**caractérisé par**
une unité de contrôle (10) pour évaluer une information concernant l'attention du conducteur et/ou des objets dangereux devant le véhicule et pour influencer une représentation d'indication dans la surface de projection en fonction de l'attention du conducteur et/ou des objets dangereux.

5. Dispositif d'affichage par projection selon l'une des revendications précédentes,
**caractérisé par**
une unité de réglage pour générer une modification de position linéaire et/ou de rotation d'une représentation d'image projetée sur la surface de projection en fonction de la direction de visée du conducteur.

6. Dispositif d'affichage par projection selon l'une des revendications précédentes,
**caractérisé en ce que**
l'optique d'image comporte un miroir déformable (22).

7. Dispositif d'affichage par projection selon l'une des revendications précédentes,
**caractérisé par**
une mémoire (14) pour enregistrer la direction de visée de base pour fixer la position de la projection lors d'une initialisation du dispositif d'affichage par projection.
